# EUROPEAN PATENT APPLICATION

(11) **EP 2 175 122 A2**
(43) Date of publication of application: **14.04.2010**
(21) Application number: 09252373.7
(22) Date of filing: 08.10.2009
(51) Int. Cl.: F02D 41/02, F02D 41/40

(54) **Exhaust gas purification system for internal combustion engine**

(30) Priority: 10.10.2008 JP 2008264519
(71) Applicant: Toyota Jidosha Kabushiki Kaisha, Toyota-shi, Aichi 471-8571 (JP)
(72) Inventor: Miyazaki, Masataka, Aichi-Ken, 471-8571 (JP); Fujita, Keimei, Aichi-Ken, 471-8571 (JP); Ischikawa, Motohiko, Aichi-Ken, 471-8571 (JP)
(74) Representative: Smith, Samuel Leonard

(57) **Abstract**

Based on an engine speed and an engine load (e.g. a fuel injection amount for primary fuel injection), an injection timing (A) for diesel particulate filter (DPF) regeneration fuel injection is set such that a crank angle (or time period) after compression top dead center (TDC) is minimized in a range in which there is no increase in shaft torque of the engine. This improves regeneration efficiency of the DPF, and thus, reduces an increase in degree of oil dilution (mixture of fuel into engine oil) due to the DPF regeneration fuel injection.

## Description

### BACKGROUND OF THE INVENTION

### 1. Field of the Invention

The present invention relates to an exhaust gas purification system that purifies exhaust gas from an internal combustion engine (hereinafter referred to as engine). More particularly, the present invention relates to an exhaust gas purification system for an internal combustion engine, which uses a particulate filter to purify exhaust gas from a diesel engine.

### 2. Description of the Related Art

An internal combustion engine, such as a gasoline engine and a diesel engine, discharges exhaust gas when the engine is running. The exhaust gas contains pollutants that should not be directly discharged to the atmosphere. Particularly, exhaust gas from the diesel engine contains particulate matter whose principal component is carbon (hereinafter sometimes referred to as PM), soot, soluble organic fraction (SOF), and so forth. These emissions cause air pollution.

A conventional exhaust gas purification system for a diesel engine uses a particulate filter to remove PM from the exhaust gas. The particulate filter is provided in an exhaust passage of the diesel engine. When the exhaust gas flows through the exhaust passage, the particular filter traps PM that is contained in the exhaust gas to reduce the amount of PM emissions. For example, a diesel particulate filter (DPF) or a diesel particulate-NOₓ reduction system (DPNR) catalyst is used as a particulate filter.

As the amount of PM that is trapped increases, PM deposits accumulate on the filter. This causes the particulate filter to be clogged with the PM deposits. Thus, pressure loss of the exhaust gas that passes through the particulate filter increases, and accordingly, engine exhaust backpressure increases. This reduces engine power output and fuel economy.

A conventional approach to solve the forgoing problems is to increase a temperature of the exhaust gas, when the amount of PM that is trapped in the particulate filter (the amount of PM deposits) reaches a specified amount, in order to increase a catalyst bed temperature. Thereby, the PM deposits on the particulate filter are oxidized (burnt) to regenerate the particulate filter (see Japanese Patent Application Publications No. 2008-150966, No. 2008-202573 and No. 2008-180107 (JP-A-2008-150966, JP-A-2008-202573 and JP-A-2008-180107), for example).

In the above particulate filter regeneration control (hereinafter sometimes simply referred to as "filter regeneration control"), for example, following primary fuel injection (main injection), a small amount of fuel is secondarily sprayed (post injection) to increase the temperature (exhaust gas temperature) of an oxidation catalytic converter (OCC) provided upstream of the particulate filter (on the upstream side in the exhaust gas flow). Subsequently, additional post injection that is intended for filter regeneration is performed to oxidize (burn) the PM deposits on the particulate filter.

Under the conventional filter regeneration control, in order to avoid fuel that is sprayed during filter regeneration fuel injection (post injection) from being burned in the combustion chamber, the fuel is sprayed at a specified timing near the beginning of the exhaust stroke. However, the fuel injection timing for the filter regeneration fuel injection thus specified prevents the use of the hydrocarbons discharged from the engine to burn the PM that has accumulated on the particulate filter. Consequently, it takes a prolonged period to regenerate the particulate filter. This can possibly increase a degree of oil dilution (mixture of the fuel into engine oil) due to the post injection.

### SUMMARY OF THE INVENTION

The present invention provides an exhaust gas purification system that executes a filter regeneration control in which filter regeneration fuel injection is performed after primary fuel injection into a combustion chamber to oxidize and remove PM deposits on a particulate filter. The exhaust gas purification system performs the filter regeneration fuel injection at an appropriate timing, and thus prevents an increase in degree of oil dilution that may be caused by the filter regeneration fuel injection.

A first aspect of the present invention is directed to an exhaust gas purification system for an internal combustion engine, the system including: a filter disposed in an exhaust passage of the internal combustion engine to trap PM that is contained in exhaust gas; and an OCC that is disposed in the exhaust passage upstream of the filter in an exhaust gas flow. The exhaust gas purification system controls an injection timing of the internal combustion engine in order to execute a filter regeneration control under which filter regeneration fuel injection (post injection) is performed following primary fuel injection, thereby to oxidize and remove PM deposits on the filter. The exhaust gas purification system sets an injection timing to start the filter regeneration fuel injection such that a crank angle or a time period after compression top dead center (TDC) of the internal combustion engine is minimized in a range in which there is no variation (i.e. no increase) in shaft torque of the internal combustion engine.

The exhaust gas purification system for an internal combustion engine according to the first aspect of the present invention allows the filter regeneration fuel injection to be performed at an appropriate timing. This point will be described in detail below. Under a conventional filter regeneration control, the filter regeneration fuel injection is performed at a specified injection timing near the beginning of the exhaust stroke. Accordingly, the hydrocarbons discharged during the DPF regeneration fuel injection cannot be effectively used to burn the PM accumulated in the DPF 22. Consequently, it takes a longer period to regenerate the particulate filter. This can possibly increase a degree of oil dilution (mixture of the fuel into engine oil) due to the filter regeneration fuel injection. In order to avoid these problems, the injection timing for the filter regeneration fuel injection may be advanced toward TDC, so that an elapsed time after heating the OCC is shortened, and accordingly, PM combustion efficiency (regeneration efficiency) improves. However, if the injection timing for the filter regeneration fuel injection is advanced too close to an injection timing for OCC heating fuel injection, the fuel that is sprayed during the filter regeneration fuel injection bums in a combustion chamber, causing an increase in shaft torque of the internal combustion engine. Consequently, this may deteriorate the drivability or cause more severe engine combustion noise than usual.

In view of the foregoing problems, according to the present invention, the filter regeneration fuel injection timing is set such that the crank angle or the time period after TDC is minimized in a range in which there is no variation (i.e. no increase) in shaft torque of the internal combustion engine. This allows the filter regeneration fuel injection to be performed at an optimum injection timing, and thus allows for an effective use of the HC that is discharged at the time of the filter regeneration fuel injection. Thereby the deterioration of the drivability and variations in engine combustion noise are suppressed, while the increase in degree of oil dilution due to the filter regeneration fuel injection is reduced.

Preferably, in the exhaust gas purification system according to the first aspect of the present invention, the injection timing to start the filter regeneration fuel injection, may also be determined based on an engine speed and an engine load. To be more specific, the primary fuel injection amount corresponds to the engine load.

Preferably, the injection timing may preferably be determined experimentally or mathematically by using parameters for the engine speed and the primary fuel injection amount, for optimum heating efficiency of the OCC. Further preferably, a fuel injection amount for the filter regeneration fuel injection may be determined experimentally or mathematically by using parameters for the engine speed and the primary fuel injection amount.

Still further preferably, following the primary fuel injection and before the filter regeneration fuel injection, the OCC heating fuel injection is performed to heat the OCC, and an injection timing, at which the OCC heating fuel injection starts, may be determined based on the engine speed and the engine load. To be more specific, a primary fuel injection amount may correspond to the engine load.

Preferably, the engine speed and the primary fuel injection amount are used as parameters to determine the injection timing, at which the OCC heating fuel injection starts, for the optimum heating efficiency of the OCC. Further preferably, a fuel injection amount for the filter regeneration fuel injection may be determined experimentally or mathematically by using parameters for the OCC heating fuel injection.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a schematic diagram that shows an example of a diesel engine to which an exhaust gas purification system according to an embodiment of the present invention is applied;
FIG. 2 is a block diagram of a configuration of a control system that includes an ECU shown in FIG. 1;
FIG. 3 shows injection timings for primary fuel injection (main injection), for OCC heating fuel injection (post injection (b)), and for DPF regeneration fuel injection (post injection (a)), which are performed by the exhaust gas purification system according to the embodiment of the present invention;
FIG. 4 shows an example of an injection timing map to determine the injection timing (a crank angle after TDC) for the DPF regeneration fuel injection that is performed by the exhaust gas purification system according to the embodiment of the present invention;
FIG 5 shows an example of a fuel injection amount map to determine a fuel injection amount for the DPF regeneration fuel injection that is performed by the exhaust gas purification system according to the embodiment of the present invention;
FIG. 6 shows an example of an injection timing map to determine the injection timing (a crank angle after TDC) for the OCC heating fuel injection that is performed by the exhaust gas purification system according to the embodiment of the present invention;
FIG. 7 shows an example of a fuel injection amount map to determine a fuel injection amount for the OCC heating fuel injection that is performed by the exhaust gas purification system according to the embodiment of the present invention; and
FIG. 8 shows an example of an injection timing map to determine the injection timing (a time period after TDC) for the DPF regeneration fuel injection that is performed by the exhaust gas purification system according to the embodiment of the present invention.

### DETAILED DESCRIPTION OF EMBODIMENTS

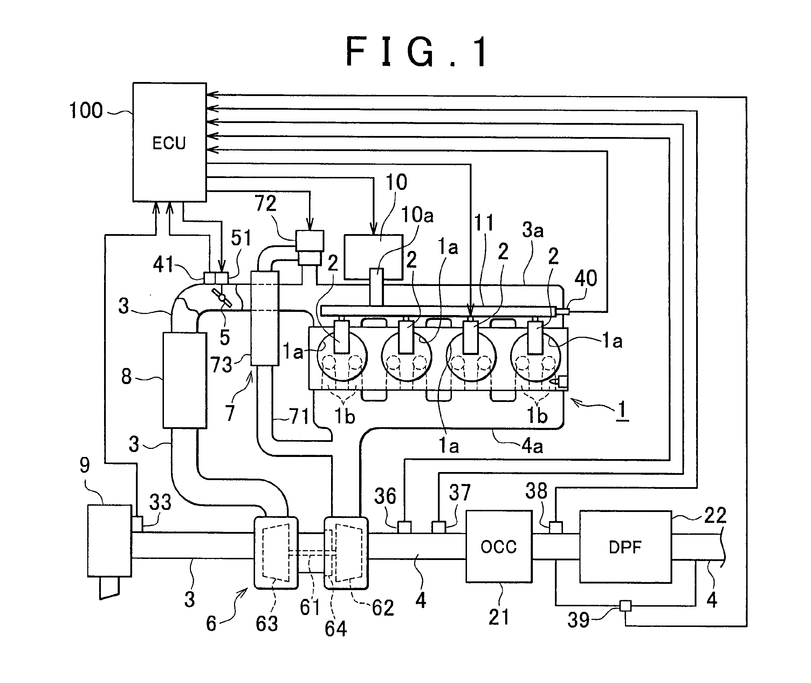

Embodiments of the present invention will be described below with reference to the drawings. A general construction of a diesel engine, to which the present invention is applied, will be described with reference to FIG. 1.

In this embodiment, the diesel engine 1 (hereinafter referred to as "engine 1") is a common rail in-cylinder direct-injection four-cylinder engine. The engine 1 has combustion chambers 1a within associated cylinders of the engine 1. Each combustion chamber 1a is provided with an injector (a fuel injection valve) 2 that sprays fuel to burn in the combustion chamber 1a. The injector 2 of each cylinder is connected to a common rail 11. The common rail 11 is connected to a fuel supply pump 10.

The fuel supply pump 10 draws fuel from a fuel tank and pressurizes the fuel to supply the high-pressure fuel to the common rail 11 through a fuel passage 10a. The common rail 11 serves as an accumulator that maintains the pressure of fuel that is supplied from the fuel supply pump 10 at a specified level (accumulates the high-pressure fuel that is supplied from the fuel supply pump 10). The common rail 11 distributes the accumulated fuel to each injector 2. The injector 2 is an electromagnetically driven valve that is designed to be open upon application of a specified voltage to spray fuel into the associated combustion chamber 1a. The opening/closing (a fuel injection amount and an injection timing) of the injector 2 is duty-controlled by an electronic control unit (ECU) 100.

The engine 1 connects to an intake passage 3 and an exhaust passage 4. In the intake passage 3, an air cleaner 9, an airflow meter 33, a compressor impeller 63 of a turbocharger 6, an intercooler 8, and a throttle valve 5 are disposed in order from the upstream side to the downstream side in an intake air flow. The turbocharger 6 will be discussed later. An opening of the throttle valve 5 is controlled by a throttle motor 51. The throttle opening of the throttle valve 5 is detected by a throttle opening sensor 41. The intake passage 3 is branched at an intake manifold 3a, leading to the cylinders. The intake manifold 3a is located downstream of the throttle valve 5.

The exhaust passage 4 is branched at an exhaust manifold 4a and leads to the cylinders. The branches of the exhaust manifold 4a connect to the associated combustion chambers 1a of the cylinders, while converging into the exhaust passage 4.

In the exhaust passage 4, an oxidation catalytic converter (OCC) 21 and a diesel particulate filter (DPF) 22 are disposed. The OCC 21 oxidizes HC and carbon monoxide (CO) that are contained in exhaust gas. The DPF 22 is designed to trap particulate matter. Burning fuel in the combustion chambers 1a produces exhaust gas. The exhaust gas is delivered to the exhaust passage 4.

In the exhaust passage 4 upstream of the OCC 21 (on the upstream side in the exhaust gas flow), an A/F sensor 36 and a first exhaust gas temperature sensor 37 are disposed. The temperature of the exhaust gas that enters the OCC 21 is detected based on an output signal of the first exhaust gas temperature sensor 37. In addition, a second exhaust gas temperature sensor 38 is disposed between the OCC 21 and the DPF 22. The temperature of the exhaust gas that enters the DPF 22 is detected based on an output signal of the second exhaust gas temperature sensor 38. Furthermore, a differential pressure sensor 39 is disposed to detect the difference in pressure between the upstream side and the downstream side of the DPF 22.

The ECU 100 receives the output signals from the A/F sensor 36, the first exhaust gas temperature sensor 37, the second exhaust gas temperature sensor 38, and the differential pressure sensor 39.

The engine 1 is equipped with the turbocharger 6. The turbocharger 6 includes a turbine wheel 62 and the compressor impeller 63 that connect together through a rotor shaft 61.

The compressor impeller 63 is located facing the interior of the intake passage 3, while the turbine wheel 62 is located facing the interior of the exhaust passage 4. The turbocharger 6 thus constructed utilizes an exhaust flow (exhaust pressure) that is received by the turbine wheel 62 to rotate the compressor impeller 63 in order to force air into the engine. In this embodiment, the turbocharger 6 is a variable nozzle turbocharger that has a variable nozzle vane mechanism 64 on the side of the turbine wheel 62. Controlling the opening of the variable nozzle vane mechanism 64 allows for regulating the boost pressure of the engine 1. The intake air is heated due to the forced induction by the turbocharger 6. The intercooler 8 is located in the intake passage 3 and forcibly cools the heated intake air.

The engine 1 is equipped with an EGR system 7. The EGR system 7 recirculates a portion of the exhaust gas flowing through the exhaust passage 4 to the intake passage 3, and supplies the recirculated exhaust gas back to the combustion chambers 1a of the cylinders to reduce the combustion temperature. This decreases the amount of NOₓ emissions. The EGR system 7 includes an EGR passage 71 that connects the intake manifold 3a to the exhaust manifold 4a. The EGR passage 71 has an EGR cooler 73 and an EGR valve 72 in order from the upstream side in an EGR gas flow. The EGR cooler 73 is designed to cool EGR gas that passes (recirculates) through the EGR passage 71. Controlling the opening of the EGR valve 72 allows for adjusting the volume of EGR (volume of exhaust gas to be recirculated) to be introduced from the exhaust passage 4 (exhaust manifold 4a) to the intake passage 3 (intake manifold 3a).

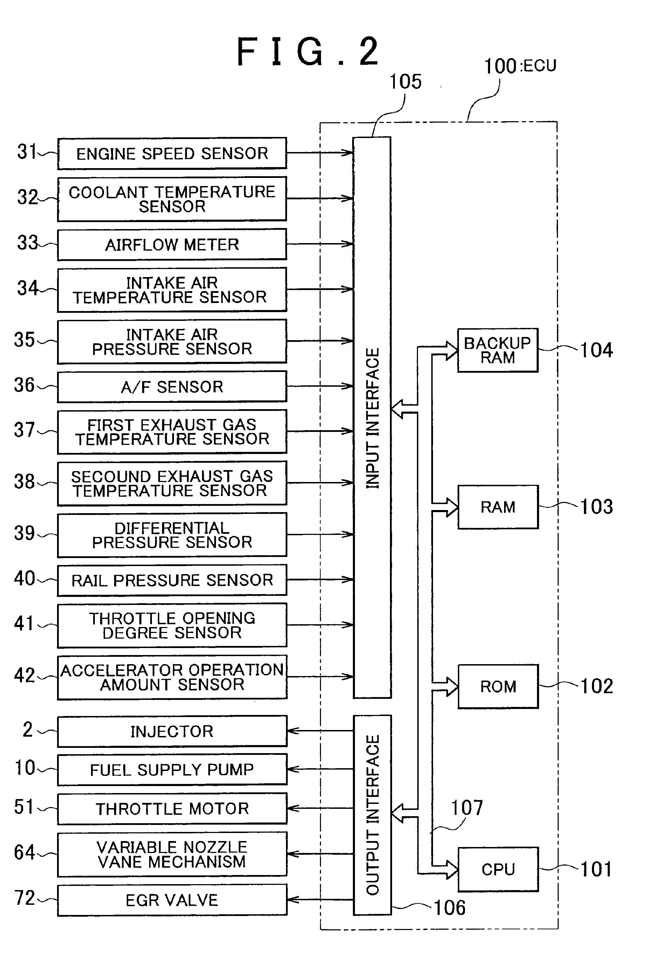

As shown in FIG. 2, the ECU 100 includes a CPU 101, a ROM 102, a RAM 103, and a backup RAM 104.

The ROM 102 stores several control programs, maps to be used for executing these control programs, and other data. The CPU 101 executes operations in accordance with the respective control programs and maps that are stored in the ROM 102. The RAM 103 is a memory that temporarily stores the results of the operations in the CPU 101 and data that is received from the respective sensors. The backup RAM 104 is a nonvolatile memory that saves data to be stored upon power-off when the engine 1 stops.

The CPU 101, the ROM 102, the RAM 103, and the backup RAM 104 are connected to each other via a bus 107, while being connected to an input interface 105 and to an output interface 106.

The input interface 105 connects with an engine speed sensor 31, a coolant temperature sensor 32, the airflow meter 33, an intake air temperature sensor 34, an intake air pressure sensor 35, the A/F sensor 36, the first exhaust gas temperature sensor 37, the second exhaust gas temperature sensor 38, the differential pressure sensor 39, a rail pressure sensor 40, a throttle opening sensor 41, an accelerator operation amount sensor 42, and so forth. The engine speed sensor 31 may detect the rotational speed of a crankshaft or the output shaft of the engine 1. The coolant temperature sensor 32 detects the temperature of engine coolant. The intake air temperature sensor 34 is located in the intake manifold 3a to detect the temperature of the intake air. The intake air pressure sensor 35 is located in the intake manifold 3a to detect the pressure of the intake air. The rail pressure sensor 40 is designed to detect the pressure of fuel in the common rail 11.
The ECU 100 receives output signals from these sensors.

The output interface 106 connects with the injectors 2, the fuel supply pump 10, the throttle motor 51 of the throttle valve 5, the variable nozzle vane mechanism 64 of the turbocharger 6, the EGR valve 72, and so forth.

The ECU 100 executes the several controls for the engine 1 based on the output signals of the aforementioned sensors. These controls include controlling the opening of the throttle valve 5 of the engine 1, and controlling the fuel injection amount and the injection timing (controlling the opening/closing of the injectors 2). Additionally, the ECU 100 executes a DPF regeneration control that will be discussed later.

The exhaust gas purification system of the present invention is controlled in accordance with the programs that are executed by the ECU 100.

Next, the DPF regeneration control will be described. First, the ECU 100 estimates an amount of PM deposits that are trapped in the DPF 22 based on the output signal of the differential pressure sensor 39 that is located at the DPF 22. If the estimated amount of PM deposits is equal to or above a value to determine if the DPF regeneration starts (an allowable maximum value), the ECU 100 determines that it is time to start regenerating the DPF 22. Then, the ECU 100 performs the post injection after the primary fuel injection to burn and remove the PM deposits on the DPF 22 and thereby regenerate the DPF 22.

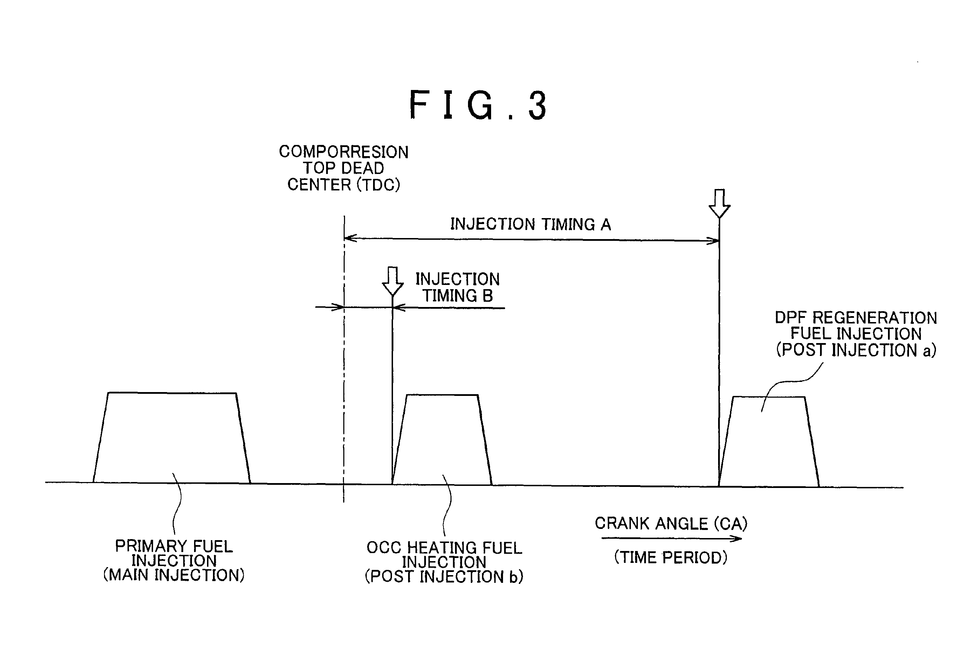

As shown more specifically in FIG. 3, the primary fuel injection (main injection), that is, the fuel is injected by the injectors 2 to the associated combustion chambers 1a, and subsequently, OCC heating fuel injection (post fuel injection (b)) is performed. The fuel that is sprayed by the injectors 2 during the OCC heating fuel injection is delivered through the exhaust passage 4 to the OCC 21. When the fuel reaches the OCC 21, HC, CO and other components in the exhaust gas are oxidized and reacted with the OCC 21. This oxidative reaction generates heat, and the heat causes the temperature of the OCC 21 (exhaust gas) to increase. Such a temperature increase causes the temperature of the DPF 22 to increase. Following the above OCC heating fuel injection, DPF regeneration fuel injection (post injection (a)) is performed at a specified timing after the OCC heating injection. The PM deposits on the DPF 22 is thereby burnt and removed.

The amount of PM deposits on the DPF 22 is decreased by performing the DPF regeneration control as described above. If the amount of the PM deposits after the DPF regeneration control has been executed is below a threshold PM deposite amount, it is determined that the regeneration is completed. The amount of PM emissions may be estimated by referring the map or other data based on parameters, such as, engine speed Ne and exhaust gas temperature (temperature of exhaust gas that enters the DPF 22). The engine speed Ne is obtained from the output signal of the engine speed sensor 31. The exhaust gas temperature is obtained from the output signal of the second exhaust gas temperature 38.

As described above, under the conventional DPF regeneration control, the DPF regeneration fuel injection (post injection (a)) is performed at a specified injection timing near the beginning of the exhaust stroke (for example, at a crank angle near the beginning of the exhaust stroke). Accordingly, the hydrocarbons discharged during the DPF regeneration fuel injection cannot be effectively used to burn the PM accumulated in the DPF 22. Consequently, it takes a long period to regenerate the DPF 22. This may increase a degree of oil dilution (mixture of the fuel into engine oil) due to the DPF regeneration fuel injection. In order to avoid these problems, the injection timing for the DPF regeneration fuel injection (post injection (a)) may be advanced toward TDC, so that the elapsed time after heating the OCC 21 is minimized, and accordingly, PM combustion efficiency (regeneration efficiency) improves. However, if the injection timing for the DPF regeneration fuel injection (post injection (a)) is advanced too close to the injection timing for the OCC heating fuel injection (post injection (b)), the fuel that is sprayed during the DPF regeneration fuel injection bums in the combustion chambers 1a, causing fluctuations (an increase) in shaft torque of the engine 1. Consequently, this can possibly deteriorate the drivability or cause more severe engine combustion noise than usual engine combustion.

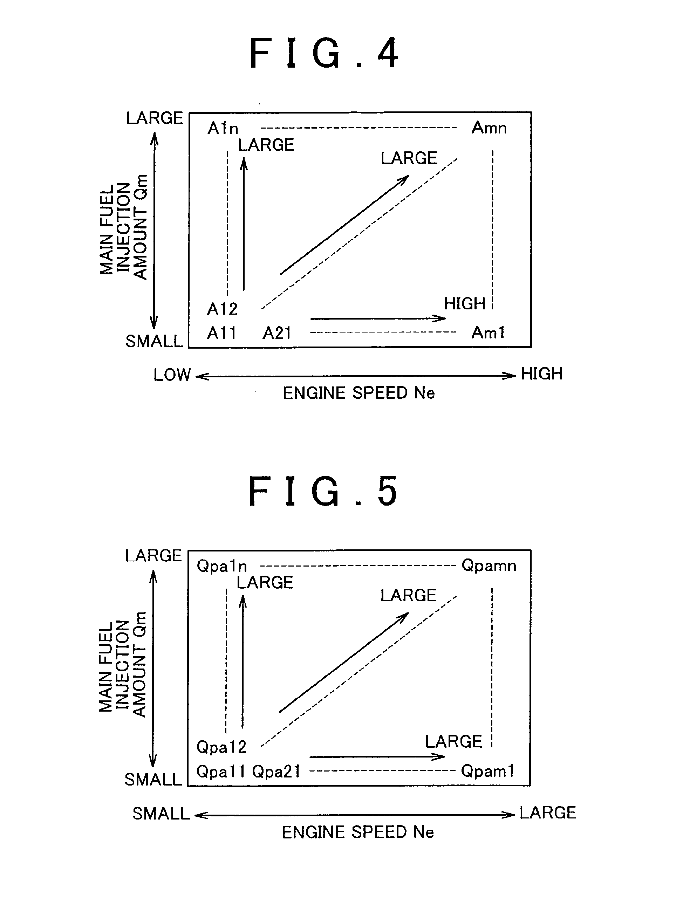

In order to solve the foregoing problems, a feature of this embodiment is that the injection timing, at which the DPF regeneration fuel injection starts, is determined such that the crank angle (a retardation angle) after TDC is minimized to the extent that there are no variations (increase) in shaft torque of the engine 1. This improves the regeneration efficiency of the DPF 22, and thus, reduces the increase in degree of oil dilution due to the DPF regeneration fuel injection. With reference to FIG. 4, a more specific example of this feature will be described below.

The map shown in FIG. 4 is used to calculate the injection timing for the DPF regeneration injection (post injection (a)). The engine speed Ne and an engine load or a fuel injection amount Qm for the primary fuel injection (hereinafter sometimes referred to as main fuel injection amount Qm) are the parameters of the map. Depending on the parameters, an injection timing A, at which the DPF regeneration fuel injection (post injection (a)) starts, is experimentally or mathematically determined. The injection timing A is a crank angle (CA) between TDC and the beginning of thepost injection (a) (i.e. DPF regeneration fuel injection). The map is plotted with the determined values of the injection timing A.

More specifically, during the engine operation with the engine speed Ne and the main fuel injection amount Qm (including the fuel injection amount for the post injection (a) (i.e. DPF regeneration fuel injection) kept constant, the injection timing for the DPF regeneration fuel injection is advanced (the crank angle is advanced) from the timing near the beginning of the exhaust stroke. In the process of the advancement, a crank angle, at which the shaft torque of the engine 1 varies (increases), is obtained. Based on the crank angle obtained, the injection timing (crank angle) A is adjusted by varying the parameters, that is, the engine speed Ne and the main fuel injection amount Qm. The injection timing (crank angle) A is adjusted to that it is as close to TDC as possible so that there are no variations in shaft torque of the engine 1. Thereby, several injection timings (crank angles) A11 to Amn for the DPF regeneration fuel injection are obtained under various engine operating conditions, and are plotted on the map. In this injection timing map, the injection timing A is determined to be a large value, as the engine speed Ne and the main fuel injection amount Qm increase.

The injection timing A may be determined as a range, taking into account the timing at which the shaft torque of the engine 1 varies due to the DPF regeneration injection (post injection (a)). If the engine speed Ne and the main fuel injection amount Qm fall between the values on the injection timing map of FIG. 4, the injection timing A for the DPF regeneration fuel injection may be calculated by interpolation.

The injection timing map of FIG. 4 is stored in the ROM 102 of the ECU 100. The ECU 100 uses this injection timing map to calculate the injection timing A, at which the DPF regeneration fuel injection (post injection (a)) starts, based on the current engine speed Ne and the main fuel injection amount Qm (a command value). The engine speed Ne is obtained from the output signal of the engine speed sensor 31. In this manner, the injection timing for the DPF regeneration fuel injection (post injection (a)) is optimized. This suppresses deterioration of the drivability and variations in engine combustion noise, while allowing for an effective use of the hydrocarbons. The hydrocarbons are discharged during the filter regeneration fuel injection and supplied to the DPF 22 to burn the PM. The increase in degree of oil dilution due to the DPF regeneration fuel injection is thus reduced. Furthermore, this results in a higher rate of increase in temperature within the DPF 22, and accordingly, the regeneration efficiency of the DPF 22 improves.

A fuel injection amount Qpa for the DPF regeneration fuel injection (post injection (a)) will next be described below. Referring to the fuel injection amount map shown in FIG. 5, the ECU 100 calculates the fuel injection amount Qpa for the DPF regeneration fuel injection based on the current engine speed Ne and the main fuel injection amount Qm (a command value). The engine speed Ne is obtained from the output signal of the engine speed sensor 31.

The engine speed Ne and the main fuel injection amount Qm are the parameters of the fuel injection amount map of FIG. 5. Depending on the parameters, the fuel injection amount Qpa is experimentally or mathematically determined such that the temperature of the DPF 22 (exhaust gas) is appropriate to PM combustion. The map is plotted with appropriately adjusted values based on the results of the determined fuel injection amount Qpa. The map is stored in the ROM 102 of the ECU 100. In the fuel injection amount map of FIG. 5, the fuel injection amount Qpa is determined to be a large value, as the engine speed Ne and the main fuel injection amount Qm increase.

The above fuel injection amount map is used to determine the fuel injection amount Qpa for the DPF regeneration fuel injection (post injection (a)). This allows DPF regeneration to be performed for an appropriate time period depending on the current engine operating conditions, and therefore, more effectively reduces the increase in oil dilution due to the post injection (a).

If the engine speed Ne and the main fuel injection amount Qm fall between the values on the fuel injection amount map of FIG. 5, the fuel injection amount Qpa for the DPF regeneration fuel injection is calculated by interpolation.

Next the description will focus on an injection timing B (see FIG. 3), at which the OCC heating fuel injection (post injection (b)) starts, and focus on a fuel injection amount Qpb.

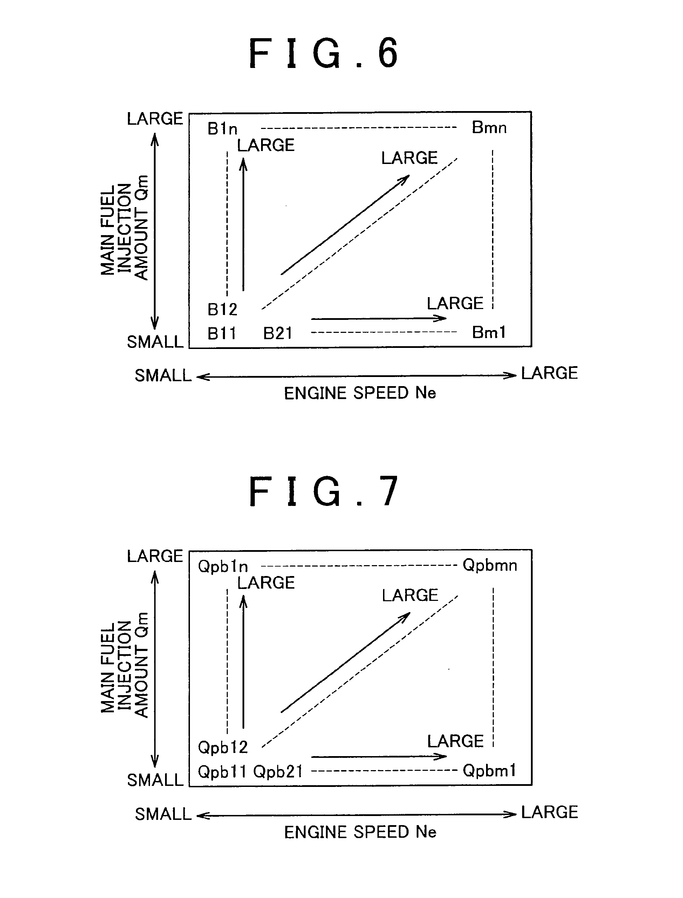

Referring to the injection timing map shown in FIG. 6 and a fuel injection amount map shown in FIG. 7, the ECU 100 calculates and determines the injection timing B and the fuel injection amount Qpb for the OCC heating fuel injection (post injection (b)) based on the current engine speed Ne and the main fuel injection amount Qm (a command value). The engine speed Ne is obtained from the output signal of the engine speed sensor 31.

The engine speed Ne and the main fuel injection amount Qm are the parameters of the injection timing map of FIG. 6. Depending on the parameters, the injection timing B is experimentally or mathematically determined for optimum heating efficiency of the OCC 21. The injection timing B is a crank angle between TDC and the beginning of the post injection (b). The map is plotted with appropriately adjusted values based on the results of the determined injection timing B. The map is stored in the ROM 102 of the ECU 100. In the injection timing map of FIG. 6, the injection timing B is further retarded with increases in the engine speed Ne and the main fuel injection amount Qm.

The engine speed Ne and the main fuel injection amount Qm are the parameters of the fuel injection amount map of FIG. 7. Depending on the parameters, the fuel injection amount Qpb is experimentally or mathematically determined such that the OCC 21 (exhaust gas) is heated to a target temperature. The map is plotted with appropriately adjusted values based on the results of the determined fuel injection amount Qpb. The map is stored in the ROM 102 of the ECU 100. In the fuel injection amount map of FIG. 7, the fuel injection amount Qpb is increased with increases in the engine speed Ne and the main fuel injection amount Qm.

These injection timing map and fuel injection amount map are used to determine the injection timing and the fuel injection amount for the OCC heating fuel injection (post injection (b)). This improves the heating efficiency of the OCC 21, and therefore, allows for further improvement in DPF regeneration efficiency.

If the engine speed Ne and the main fuel injection amount Qm fall between the value points on the maps of FIG. 6 and FIG 7, the injection timing B and the fuel injection amount Qpb for the OCC heating fuel injection may be calculated by interpolation.

In the above embodiment, the injection timing for the DPF regeneration fuel injection is defined by the crank angle after TDC. However, the present invention is not limited to the crank angle. The injection timing for the DPF regeneration fuel injection may be defined by a time period (an elapsed time) after TDC.

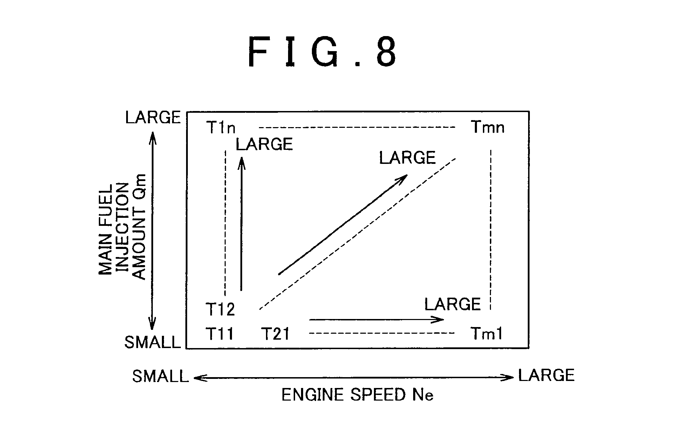

Such other embodiments will be described below. As shown in a map of FIG. 8, the engine speed Ne and the engine load or the main fuel injection amount Qm are the parameters of the map. Depending on the parameters, an injection timing T at which to start the DPF regeneration fuel injection (post injection (a)) is experimentally or mathematically determined. The injection timing T is a time period after TDC. The map is plotted with the determined values of the injection timing T. This map may be used to determine the injection timing T to start the DPF regeneration fuel injection based on the actual engine speed Ne and the main fuel injection amount Qm.

In the injection timing map of FIG. 8, as with the injection timing map of FIG. 4, when the engine operates at engine speed Ne and the main fuel injection amount Qm (including the fuel injection amount for the post injection (a)) remains constant, the injection timing for the DPF regeneration fuel injection (post fuel injection (a)) may be advanced from near the beginning of the exhaust stroke toward TDC. In the process of the advancement, a timing (an elapsed time after TDC), at which the shaft torque of the engine 1 increases, may be obtained. Based on the timing obtained, adjustment processing for the injection timing (the elapsed time) T may be executed by varying the parameters, that is, the engine speed Ne and the main fuel injection amount Qm. The adjustment processing appropriately adjusts the injection timing (the elapsed time) T to as close to TDC as possible, to the extent that there are no variations in shaft torque of the engine 1. Thereby, several injection timings T11 to Tmn, at which the DPF regeneration fuel injection (post injection (a)) starts, may be obtained under various engine operating conditions, and may be plotted on the map. In the injection timing map of FIG. 8, the injection timing T is also determined to be a large value, as the engine speed Ne and the main fuel injection amount Qm increase. The injection timing T may be determined at a value with a margin, taking into account the timing at which the shaft torque of the engine 1 varies due to the DPF regeneration injection (post injection (a)). If the engine speed Ne and the main fuel injection amount Qm are intermediate between the value points on the injection timing map of FIG. 8, the injection timing T for the DPF regeneration fuel injection may be calculated by interpolation.

The injection timing, at which the OCC heating fuel injection (post injection (b)) starts, may also be defined by the elapsed time after TDC.

The above embodiments employ an approach to estimate the amount of PM deposits based on the output signal of the differential pressure sensor 39. However, the present invention is not limited to this approach. Other approaches may be also employed. One example approach is to estimate the amount of PM deposits from an amount of PM adhesion. The amount of PM adhesion may be experimentally determined depending on the operating conditions of the engine 1 (e.g. exhaust gas temperature, fuel injection amount, and engine speed). The determined values of the amount of PM adhesion are plotted on the map. These values are read from the map and are summed to obtain the amount of PM deposits. Another example approach is to estimate the amount of PM deposits from the distance traveled by the vehicle or the travel duration. Further alternatively, at least two of the three aforementioned approaches to estimate the amount of PM deposits may be employed. When either one of the estimated amounts of PM deposits reaches a value to determine if the DPF regeneration starts (an allowable maximum value), the DPF regeneration control may be executed.

In the above embodiments, the DPF is used as a particulate filter. The present invention is not limited to the DPF, and may also be applied to an exhaust gas purification system that uses a Diesel Particulate NOx Reduction system (DPNR) catalyst.

In the aforementioned embodiments, the exhaust gas purification system of the present invention is applied to the in-cylinder direct-injection four-cylinder diesel engine. However, the present invention is not limited to this type of diesel engine. Alternatively, the exhaust gas purification system of the present invention may be applied to other diesel engines that have any number of cylinders, such as in-cylinder direct-injection six-cylinder diesel engine. Further alternatively, the exhaust gas purification system of the present invention may be applied to lean burn gasoline engines that operate predominantly in lean burn operating mode in which an air-fuel mixture with a high air-fuel ratio (lean mixture) bums. Still further, the present invention may be intended not only for vehicle engines, but also for engines that are designed for other purposes.

## Claims

1. An exhaust gas purification system for an internal combustion engine (1) that comprises a filter (22) disposed in an exhaust passage (4) of the internal combustion engine (1) to trap particulate matter contained in exhaust gas; and an oxidation catalytic converter disposed in the exhaust passage (4) upstream of the filter (22) in an exhaust gas flow, wherein the exhaust gas purification system is configured to control a filter regeneration fuel injection timing to execute a filter regeneration control, in which fuel injection is performed, after a primary fuel injection, to oxidize and remove particulate matter deposits on the filter (22), **characterized in that**
an injection timing to start the filter regeneration fuel injection is determined such that a crank angle or a time period after compression top dead center of the internal combustion engine (1) is minimized in a range in which there are no variations in shaft torque of the internal combustion engine (1).

2. The exhaust gas purification system for an internal combustion engine according to claim 1, **characterized in that**
the timing at which to start the filter regeneration fuel injection is determined based on an engine speed (Ne) and an engine load.

3. The exhaust gas purification system for an internal combustion engine according to claim 1 or 2, **characterized in that**
between the primary fuel injection and the filter regeneration fuel injection, an oxidation catalytic converter heating fuel injection is performed to heat the oxidation catalytic converter, and a timing at which to start the oxidation catalytic converter heating fuel injection is determined based on the engine speed (Ne) and the engine load.

4. The exhaust gas purification system for an internal combustion engine according to claim 2 or 3, **characterized in that**
a primary fuel injection amount corresponds to the engine load.

5. The exhaust gas purification system for an internal combustion engine according to claim 4, **characterized in that**
the injection timing at which the filter regeneration fuel injection starts is set by using parameters for the engine speed (Ne) and the primary fuel injection amount (Qm).

6. The exhaust gas purification system for an internal combustion engine according to claim 4, **characterized in that**
a fuel injection amount for the filter regeneration fuel injection is set by using parameters for the engine speed (Ne) and the primary fuel injection amount (Qm).
